# NEUE EUROPÄISCHE PATENTSCHRIFT

(11) **EP 0 418 258 B2**
(45) Veröffentlichungstag und Bekanntmachung des Hinweises auf die Entscheidung über den Einspruch: **28.08.1996**
(45) Hinweis auf die Patenterteilung: 29.04.1992
(21) Anmeldenummer: 89905389.6
(22) Anmeldetag: 10.05.1989
(51) Int. Cl.: B62D 7/14

(54) **STEUEREINHEIT ZUR LENKUNG DER HINTERRÄDER EINES STRASSENFAHRZEUGES**
CONTROL UNIT FOR STEERING THE REAR WHEELS OF A ROAD SERVICE VEHICLE
UNITE DE COMMANDE DU BRAQUAGE DES ROUES ARRIERE DE VEHICULES DE VOIRIE

(30) Priorität: 11.05.1988 DE 3816254
(43) Veröffentlichungstag der Anmeldung: 27.03.1991
(73) Patentinhaber: SIEMENS AKTIENGESELLSCHAFT, 80333 München (DE); Bayerische Motoren Werke Aktiengesellschaft, 80788 München (DE)
(72) Erfinder: RAUNER, Hans, D-8415 Nittenau (DE); GERL, Gerhard, D-8400 Regensburg (DE); DONGES, Edmund, D-8080 Fürstenfeldbruck (DE); AUFFHAMMER, Reinhard, D-8000 München 60 (DE); SEIDENFUSS, Thomas, D-8051 Massenhausen (DE)
(74) Vertreter: Fuchs, Franz-Josef, Dr.-Ing.
(86) Internationale Anmeldenummer: DE8900293
(87) Internationale Veröffentlichungsnummer: WO8910865

(56) Entgegenhaltungen:
- EP-A- 0 207 611
- EP-A- 0 243 180
- WO-A-87/03044
- JP-A-59 205 095
- JP-A-61 082 201
- US-A- 4 621 327
- US-A- 4 687 214
- US-A- 4 745 542

## Beschreibung

Die Erfindung betrifft eine Steuereinheit nach dein Oberbegriff von Anspruch 1. Eine solche Steuereinheit (EP-A 0 243 180, US-A 4 687 214) dient bei Kraftfahrzeugen mit Allradlenkung dazu, bei einem Ausfall der Hinterradlenkung so auf diese einzuwirken, daß die Fahrsicherheit des Kraftfahrzeugs gewährleistet bleibt. Ein derartiger Notfall kann z.B. dadurch verursacht werden, daß verschiedene Sensoren in dem Kraftfahrzeug, deren Signale für die Hinterradlenkung ausgewertet werden, ausfallen, daß in der Steuereinheit für die Hinterradlenkung Bauteile versagen oder daß Kabelbrüche auftreten. Es kann auch ein Stromausfall oder ein sonstiges Versagen des Antriebs für die Hinterradlenkur\g vorkommen.

Bei den bekannten Steuereinheiten wird der Notbetrieb durch einen Mikrocomputer oder durch eine diskrete elektronische Schaltung gesteuert. Es läßt sich nicht ausschließen, daß an einer solchen Steuerung selbst Fehler und Ausfälle auftreten können.

Der Erfindung liegt die Aufgabe zugrunde, die Sicherheit einer Steuereinheit zum Lenken der Hinterräder eines Kraftfahrzeugs in einem Notfall zu erhöhen.

Diese Aufgabe wird durch eine Steuereinheit gemäß Patentanspruch 1 gelöst.

Weiterbildungen der Erfindung sind durch die Unteransprüche charakterisiert.

Die Vorteile der Erfindung liegen unter anderem darin, daß mit ihr unterschiedliche Notbetriebskonzepte realisiert werden können. Im Notfall kann sowohl der Hinterrad-Lenkwinkel durch Blockieren der Lenkung starr beibehalten werden, als auch die Hinterradlenkung in ihre Ausgangs- oder Neutralstellung überführt und dort arretiert werden.

Außerdem wird die Fehlertoleranz der Steuereinheit erhöht, indem verhindert wird, daß sie wegen eines fehlerhaften Rechners kein Lenknotsignal abgibt, obwohl ein Notfall tatsächlich vorliegt. Kritische Fahrsituationen werden somit sicher verhindert.

Das der Erfindung zugrunde liegende Konzept unterscheidet sich auch von anderen - aus verschiedenen Bereichen der Technik bekannten - Doppelrechnersystemen. Genannt seien z.B. Systeme mit einer Test-oder Vergleichereinheit, die die Ergebnisse der beiden Rechner miteinander vergleicht. Die Erfindung vermeidet sowohl die Zeitverzögerungen, die durch den Vergleich verursacht werden, als auch die Gefahr, daß die Vergleichereinheit selbst fehlerhaft ist. Im schlimmsten Fall kann bei ihr ein unnötiges Lenknotsignal abgegeben werden, d.h. mit der erfindungsgemäßen Steuereinheit liegt man immer auf der sicheren Seite.

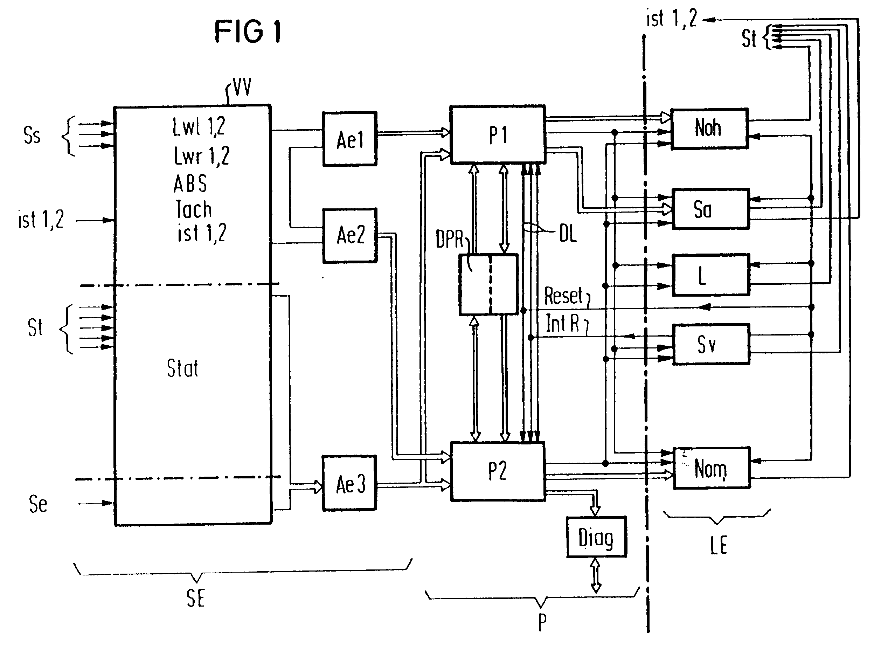

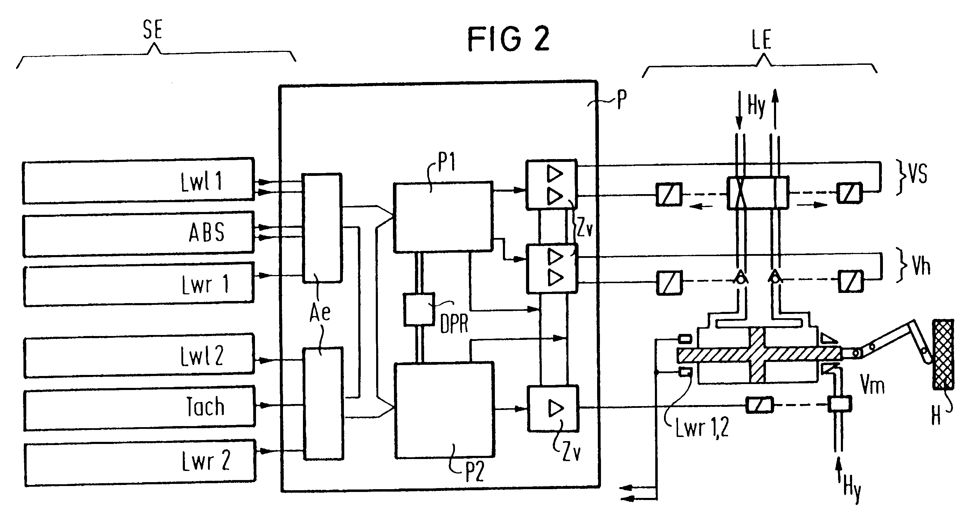

Ausführungsbeispiele der Erfindung werden im folgenden anhand der Figuren 1 und 2 der Zeichnung erläutert.

Bei dem in FIG 1 gezeigten Beispiel enthält die Lenkeinrichtung LE beispielsweise eine hydraulische Klemmeinrichtung Noh, welche im Notfall die Lenkung der Hinterräder so blockiert, daß der bis dahin vorhandene Lenkwinkel weiterhin starr beibehalten bleibt, indem hydraulisch jegliche Lenkwinkeländerung durch entsprechende Brems- bzw. Klemmvorrichtungen verhindert wird.

Außerdem enthält die Lenkeinrichtung LE ein Stellaggregat Sa, welches im Normalbetrieb den Lenkwinkel der Hinterräder einstellt. Die Rechner P1, P2 steuern also bei diesem Beispiel den Lenkradwinkel der Hinterräder auch im Normalbetrieb, eben mittels des Stellaggregates Sa. Daher greifen bei diesem Beispiel die Rechner nicht nur in Notfall in die Lenkwinkelsteuerung der Hinterräder ein, sondern auch im Normalbetrieb.

Ferner enthält die Lenkeinrichtung LE eine oder mehrere Lampen L, welche dem Fahrerden Normalbetrieb und den Störfall signalisieren und z.B. auch den momentanen Wert des Lenkwinkels anzeigen können.

Darüber hinaus enthält im gezeigten Beispiel die Lenkeinrichtung LE zusätzlich eine Überwachungseinheit Sv, welche, z.B. mittels eigener Sensoren und/oder ausgelöst durch ein Lenknotsignal, das Auftreten von Fehlem in der Lenkeinrichtung LE - evtl. auch in sonstigen Teilen der Steuereinheit und/oder auch in sonstigen Teilen des Straßenfahrzeuges - überwacht. Diese Überwachungseinheit Sv kann notfalls reagieren, z.B. einen Reset auslösen kann, welcher die Auswertung durch die Rechner unterbricht und die Rechner zu einem Neustart ihrer Auswertung veranlaßt oder auf sonstige Weise ein entspechendes Überwachungssignal - bevorzugt an die Rechner P1, P2 - liefert.

Die Lenkeinrichtung LE enthält zusätzlich in redundanter Weise eine mechanische Klemmeinrichtung Nom, welche rein mechanisch im Notfall den bis dahin gegebenen Lenkwinkel der Hinterräder starr beibehält Die Lenkeinrichtung LE enthält also aus Sicherheitsgründen zwei, durch Noh/Nom gebildete Notorgane, die, jedes für sich., im Notfall den Lenkwinkel entsprechend dem gewählten Notbetriebskonzept - im vorliegenden Fall also durch Klemmung der Lenkung - notfallgerecht steuern.

Statt solcher Klemmvorrichtungen können erfindungsgemäß auch andere Arten von Notorganen angebracht sein, welche im Notfall z.B. den Lenkwinkel mehr oder weniger verzögert auf Null einstellen.

Die einzelnen Organe der Lenkeinrichtung LE weisen zu ihrer Überwachung eigene Signalausgänge St auf, welche also Testsignale bzw. Statussignale liefern und im gezeigten Beispiel mit Signaleingängen St einer Vorverstärkerstufe VV der Rechner P1, P2 verbunden sind.

In der Vorverstärkerstufe VV sind zusätzlich Sensoren bzw. die solchen Sensoren zugeordneten AnalogDigital-Umwandler angebracht, z.B. elektronische Einheiten, welche den Zustand eines Lenkradwinkelsensors Lwl, eines automatischen Bremssystems ABS, der Geschwindigkeit Tach, den sicherheitshalber gedoppelten Statusausgängen Ist 1,2 des Stellaggregates Sa, den sicherheitshalber gedoppelten Räder-Lenkwinkelsensoren Lwr1,2, sonstigen Statusüberwachungen Stat und sonstigen beliebigen Eingängen Se - z.B. für die Außentemperatur, die Reifentemperatur und/oder die Lichtreflexion der mehr oder weniger spiegelnden Fahrbahn - entsprechen können.

In dieser Vorverstärkereinheit VV sind also nicht unbedingt nur die Sensoren selbst eingeschlossen, sondern oft auch elektronische Bestandteile derselben, welche die von Sensoren gelieferten Sensorsignale, vgl. Ss, mehr oder weniger umrechnen bzw. umformen und an ihrem Ausgang Steuersignale liefern, welche den beiden Rechnern P1, P2 direkt oder über Zwischenstufen - vgl. Ael bis Ae3 - zugeführt werden.

Bei der Erfindung sind also mindestens zwei Rechner P1, P2 vorhanden, welchen die Steuersignale zur Auswertung - d.h. zur Errechnung eines Rechenergebnisses, das seinerseits jeweils Steuersignale für die Lenkeinrichtung LE erzeugen kann - zugeführt werden. Beide Rechner P1, P2 verarbeiten die ihnen im gezeigten Beispiel digital zugeführten Steuersignale also entsprechend Programmen, die sie speichern. Diese Programme enthalten oft Befehle, welche komplizierten Differentialgleichungen und zugehörenden, manchmal recht langwierigen Iterativverfahren entsprechen. Aus den Steuersignalen Ss, Lwl1, Lwr1/2, ABS, Tach, Ist1/2, St, Se werden also mittels dieser Programme mit manchmal geringerem, oft aber relativ großem Zeitaufwand zu Rechenergebnissen verarbeitet, wobei die Rechenergebnisse trotz hoher Rechentaktfrequenz im MHz-Bereich oft jeweils erst nach 10 msec oder 40 msec vorliegen. Jeder Rechner P1, P2 für sich leitet aus seinen eigenen Rechenergebnissen ab, ob ein Notfall vorliegt oder nicht. Falls ein Notfall vorliegt, liefert der betreffende Rechner, ohne sein Rechenergebnis erst noch mit dem Rechenergebnis des anderen Rechners zu vergleichen, sofort sein Lenknotsignal unmittelbar - evtl. verstärkt Ober Zwischenverstärker Zv, vgl. FIG 2 - an die Lenkeinrichtung LE ab, gemäß dem in FIG 1 gezeigten Fall sofort sowohl an die hydraulische Klemmeinrichtung Noh als auch an die mechanische Klemmeinrichtung Nom.

Nur wenn beide Rechner P1, P2 gleichzeitig feststellen, daß soeben ein Notfall eingetreten ist, liefern beide Rechner P1, P2 gleichzeitig ihr Lenknotsignal individuell an die betreffenden Organe Noh/Nom der Lenkenrichtung LE direkt ab. Falls zuerst der eine Rechner und erst mit einer gewissen Verzögerung - oder nie - der andere Rechner das Eintreten des Notfalls erkennt, liegt zumindest eine gewisse Zeitverschiebung zwischen der Abgabe ihrer individuellen Lenknotsignale. Die Notorgane Noh/Nom werden dann aber bereits durch das erste Lenknotsignal aktiviert, weil bei der Erfindung zur Vermeidung von Zeitverzögerungen nicht erst abgewartet wird - z.B. mit Hilfe einer den beiden Rechnern P1, P2 nachgeschalteten Vergleichereinheit-, bis beide Rechner P1, P2 das Eintreten des Notfalles signalisierten.

Bei der Erfindung ist also verhindert, daß ein fehlerhaft arbeitender Rechner der Recheneinheit irrtümlicherweise kein Lenknotsignal abgibt, obwohl ein Notfall vorliegt, weil bei der Erfindung der andere der beiden Rechner den Notfall erkennt und seinerseits unverzüglich sein Lenknotsignal sofort und direkt an die Notorgane Noh/Nom abgibt und die Steuerung der Lenkwinkel der Hinterräder gemäß dem gewählten Notbetriebskonzept auslöst Die Erfindung ist hierbei nicht an ein spezielles Notbetriebskonzept gebunden : z.B. daß im Notfall der bisher gegebene Lenkwinkel der Hinterräder, wie bisher bevorzugt beschrieben wurde, starr beibehalten wird. Statt der Notorgane Noh/Nom können auch andersartige Notorgane angebrachtwerden, welche im Notfall z.B. das mehr oder weniger verzögerte Einstellen des Lenkwinkels Null der Hinterräder auslöst.

Bei der Erfindung handelt es sich also um ein neuartiges Sicherheitskonzept, welches zusätzlich zu beliebigen Notbetriebskonzepten angewandt werden kann und zur weiteren Verbesserung der Beherrschung des Straßenfahrzeuges im Notfall dient. Durch die Erfindung wird die Fehlertoleranz der Steuereinheit erhöht, besonders indem verhindert wird, daß ein fehlerhaft arbeitender Rechner irrtümlicherweise kein Lenknotsignal abgibt, obwohl ein Notfall vorliegt - eine besonders gefährliche Situation, die zu sehr schweren Unfällen des Straßenfahrzeuges führen könnte.

Trotzdem gestattet die Erfindung, im Notfall besonders schnell das Lenknotsignal abzugeben und die Maßnahmen gemäß dem gewählten beliebigen Notbetriebskonzept unverzüglich einzuleiten.

Das in FIG 2 gezeigte Ausführungsbeispiel ist sehr ähnlich wie das in FIG 1 gezeigte aufgebaut und betrieben. Statt einer Vorverstärkereinheit VV sind hier Sensoreinheiten angebracht, die für sich jeweils schon - zumindest zum Teil - elektronische Bestandteile enthalten, so daß die Vorverstärkereinheit VV sozusagen in Einzelteile aufgelöst und in den Sensoreinheiten enthalten ist. Diese Sensoreinheiten stellen z.B. gedoppelte Lenkradwinkel-Sensoreinheiten Lwl 1/2 dar, wobei der eine Sensor Lwll z.B. den Lenkwinkel an der Lenksäule und der andere Lenkradwinkel-Sensor Lw12 z.B. am Lenkgetriebe und/oder an Teilen der Lenkung der Vorderräder angebracht sein mag. In ähnlicher Weise sind gedoppelte Hinterradlenkwinkel-Sensoreinheiten Lwr1/2 angebracht, welche z.B. getrennt voneinander den Hinterrad-Lenkwinkel an beiden Hinterrädern und/oder indirekt an zugehörenden Lenkstangen und/oder Lenkgetriebeteilen messen. Ferner sind Sensoreinheiten Tach und ABS zur Erfassung der Fahrzeuggeschwindigkeit und des Bremssystemes angebracht.

Das in FIG 2 gezeigte Beispiel enthält wieder zwei Rechner P1, P2, wobei die Signale der Sensoren, d.h. die den Rechnern zugeführten Steuersignale, wie bei dem in FIG 1 gezeigten Beispiel in den beiden Rechnern P1, P2 ausgewertet werden.

Das in FIG 2 gezeigt Beispiel enthält Leistungsverstärker als Zwischenverstärker Zv, welche ihrerseits dann die Lenkeinrichtung LE steuern, wobei hier die Lenkeinrichtung LE beispielhaft nach einem hydraulischen Verfahren arbeitet. Die Druckflüssigkeit Hy wirkt über mechanische Sicherheitsventile Vm, über hydraulische Sicherheitsventile Vh und Servoventile Vs auf hydraulisch gesteuerte Lenkwinkel-Beeinflussungseinheiten der Hinterräder, von denen eines, mit H bezeichnet, symbolisch mit Teilen seines Lenkgestänges, angedeutet ist. Beispielhaft sind Sensoren Lwr1/2 gezeigt, welche indirekt den Lenkwinkel der Hinterräder H erfassen. Auch hier ist die Fehlertoleranz der Steuereinheit erhöht, indem erfindungsgemäß verhindert wird, daß die Recheneinheit irrtümlicherweise kein Lenknotsignal abgibt, obwohl ein Notfall vorliegt, wobei jeder der beiden Rechner für sich, unabhängig vom andern Rechner, im Notfall sein Lenknotsignal sofort an die Lenkeinrichtung abgibt.

Den Rechnern P1, P2 können zum Selbsttest der Steuereinheit wie bei dem in FIG 1 gezeigten Beispiel Testsignale und/oder Statussignale St - vgl. FIG 1, in FIG 2 nicht gezeigt - von Bestandteilen der Steuereinheit zugeführt werden, wobei der betreffende Rechner P1 und/oder P2, sobald er gemäß dem Selbsttest Störungen von Bestandteile, z.B. eines der gedoppelten Sensoren oder eines Notorgans Noh/Nom oder eines der Rechner P1, P2 selbst feststellte, in jedem Fall sicherheitshalber ein Lenknotsignal an die hier gedoppelten - oder nicht gedoppelten - Lenknotorgane abgibt, um die Sicherheit des Straßenfahrzeugs zu erhöhen. Auf diese Weise ist auch bei dem in FIG 2 gezeigten Beispiel die gefährliche Situation vermieden, daß bei wesentlichen Defekten oder Fehlzuständen der betreffenden Bestandteile die Zuverlässigkeit der Steuereinheit erheblich reduziert ist. Auch hier kann der Fahrer des Straßenfahrzeugs - wie bei dem in FIG 1 gezeigten Beispiel - insbesondere durch signalisierende Lampen L angehalten werden, möglichst bald eine Werkstatt aufzusuchen, um den Defekt der betreffenden Bestandteile beseitigen zu lassen.

Bei dem in FIG 1 gezeigten Beispiel enthält die Lenkeinrichtung LE in redundanter Weise zwei Notorgane Noh/Nom, die jedes für sich im Notfall dem Lenkwinkel entsprechend dem gewählte Notbetriebskonzept notfallgerecht steuern. Dadurch ist ermöglicht, daß trotz eines Defektes eines dieser beiden Notorgane das vom Rechner abgegebene Lenknotsignal zuverlässig eine notfallgerechte Steuerung der Lenkung der Hinterräder auslöst, weil das noch einwandfrei funktionierende andere Notorgan in diesem Fall die notfallgerechte Steuerung seinerseits auslöst.

Jeder Rechner gibt bei dem in FIG 1 gezeigten Beispiel sein Lenkungsnotsignal - jedenfalls im Regelfall - jeweils an beide Notorgane Noh/Nom ab, und zwar jeweils über individuell den einzelnen Rechnern P1/P2 zugeordnete eigene Lenknotsignalleitungen. Ein Bruch oder eine sonstige Störung auf einer solchen Lenknotsignalleitung sowie der völlige Ausfall eines der Rechner behindert dann noch nicht die notfallgerechte Steuerung der Lenkung der Hinterräder.

Beim Start des Straßenfahrzeuges können beide Notorgane zunächst wie im Notfall betrieben werden. Die Sicherheit des Straßenfahrzeuges ist dann auch beim Start erhöht, bei welchem manche der Sensorsignale, vgl. z.B. Ss, noch keine brauchbaren Werte darstellen und eine zuverlässige Auswertung durch die beiden Rechner oft noch unmöglich ist.

Besonders bei dem in FIG 1 gezeigten Beispiel tauschen beide Rechner P1, P2 - zur nachträglichen Notfalldiagnose und/oder zum gegenseitigen Testen wahrend des laufenden Betriebes und/oder beim Start des Straßenfahrzeuges - jeweils direkt oder indirekt entsprechende dokumentierende Informationen aus. Das kann auf verschiedene Weisen durchgeführt werden:

Die schon oben erwähnte Überwachungseinheit Sv, vgl. FIG 1, kann ihrerseits einen nachträglichen Vergleich zwischen den beiden Rechnern - insbesondere zwischen deren relevanten Zwischenergebnisse und Endergebnisse der Auswertungen - vornehmen und bei Bedarf die Rechner mittels des Interrupt-Signals IntR unterbrechen, z.B. um besondere Eigentestprogramme in den beiden Rechnern ablaufen und um nachträglich die Rechner mittels eines Startsignals Reset wieder anlaufen zu lassen. Besonders falls sich einer oder beide Rechner total "verrannten", also die Iterativverfahren nach einer vernünftigen Zeitdauer zu keinem genügend präzisen Ergebnis führten, kann diese Überwachungseinheit Sv, z.B. mittels eines Watch-Dog und des Reset-Signales den oder die betreffenden Rechner wieder neu starten.

Im Prinzip ist es jedoch nicht nötig, eine eigene solche Überwachungseinheit Sv anzubringen. Stattdessen können solche Überwachungen auch innerhalb der Rechner P1, P2 selbst von Zeit zu Zeit, z.B. mit Hilfe eines Watch-Dog und direkte Leitungen DL, erreicht werden, besonders wenn die Rechner Speicherbereiche in sich aufweisen, in welche der andere Rechner aktiv schreiben und aus welchem der andere Rechner aktiv lesen kann, ohne den Betrieb des hierbei passiven Rechners zu unterbrechen.

Dazu können die Informationen z.B. aber auch in dem Dual-Port-RAM DPR so zwischengespeichert werden, daß jeder Rechner P1, P2 dort einen Speicherbereich hat, in welchem er selbst Schreiben und Lesen und der andere Rechner aber nur Lesen kann. Dies ist durch die besondere Art der Pfeile zwischen den Rechnern P1, P2 und dem betreffenden Speicher DPR angedeutet Dieser Speicher DPR kann jedoch zusätzlich einen besonderen Speicherbereich aufweisen, welcher von beiden Rechnern P1, P2 beliebig gelesen und (!) beschrieben werden kann.

Mittels eines solchen Speichers DPR kann übrigens auch eine Dokumentation erstellt werden, welche zusätzlich Steuerbefehle dokumentiert, die zu den Zwischenergebnissen oder zum Endergebnis der Auswertung führten: Durch Vergleich solcher Dokumente können sich bei bedarf die Rechner auch gegenseitig neu starten, falls die gespeicherten Informationen zu stark divergieren und besonders auch, falls die Rechner sich gänzlich verrannten. Oer Speicher DPR hat den Vorzug, daß die Rechner sogar asynchron, jedenfalls taktverschoben arbeiten können, ohne daß sich die Rechner gegenseitig durch den Vergleich verzögern und die rasche unmittelbare Erzeugung des Lenknotsignales zu behindern.

Die Rechner können so - besonders nach Abgabe eines Lenknotsignals und/oder nach dem Erkennen eines einem Fehler entsprechenden Statussignals St eines beliebigen Bestandteils, vgl. Noh, Sa, L, Sv, Nom - also zur Fehlerdiagnose veranlaßt, wozu beide Rechner angehalten werden können. Sobald die Diagnose getroffen und z.B. über die Einheit Diag abgespeichert wurde, werden schließlich beide Rechner neu gestartet.

Falls beim Start die Lenkung zunächst wie im Notfalls betrieben wird, sollte die Lenkeinrichtung LE erst dann in den Normalbetrieb übergehen, wenn die Steuersignale und/oder die genannten Informationen ergaben, daß ein kein Notfall vorliegt.

Bevorzugt wird in der Startphase des Straßenfahrzeugs jedem Rechner ein anderes Notorgan der beiden Notorgane individuell zugeordnet, bis die Überprüfung der Notorgane schließlich deren Fehlerfreiheit signalisiert Nach dem Übergang in den Normalbetrieb liefert im Notfall jeder Rechner sein Lenknotsignal aber direkt an beide Notorgane ab. Damit ist auf relativ übersichtliche Weise sicherstellbar, daß die Rechner und mehr oder weniger alle wesentlichen Organe der Steuereinheit überprüften, bevor zum Normalbetrieb, d.h. zum normalen Lenken der Hinterräder, übergegangen wird.

Besonders zuverlässig sind solche Notorgane, die selbst erst nach Aktivierung mittels eines besonderen Aktivierungsprozesses ihrerseits in den Normalbetriebszustand übergehen. Solche Notorgane sind also im Ruhezustand und unmittelbar nach dem Start des Straßenfahrzeuges von sich aus wie im Notfall betrieben, unabhängig von den beiden Rechnern.

Die Rechner können im Prinzip synchron arbeiten. Bevorzugt wird aber ein Betrieb, bei welchem die beiden Rechner zwar synchron, aber angenähert um eine halbe Auswerteperiode zeitlich verschoben arbeiten. Wenn die Auswerteperiode eines Rechners also z.B. im Mittel 20 msec dauert, dann beträgt die optimale zeitliche Verschiebung angenähert 10 msec. Auf diese Weise ist erreichbar, daß der eine Rechner sein Lenknotsignal bereits abgibt, während der andere seine Auswertung noch gar nicht abgeschloß. Eine solche Steuereinheit reagiert also im Regelfall, solange nämlich beide Rechner einwandfrei arbeiten, im Notfall besonders rasch.

Man kann jedoch die Zuverlässigkeit der Steuereinheit auch aufandere Weise zusätzlich erhöhen. So kann man die Rechner software-mäßig und/oder hardware-mäßig verschieden ausstatten und dann sogar asynchron betreiben. Entsprechend werden dann viele Folgen von Software-Fehlern und Hardware-Fehlern unschädlich, besonders wenn wegen unterschiedlicher Programme der eine der beiden Rechner sich verrennt, wo hingegen der andere Rechner aufgrund seines Programmes noch relativ rasch zu einem von ihm selbst akzeptierten Rechenergebnis kommt. Durch eine solche asynchrone Betriebsweise beider Rechner, welche besonders durch Software- und/oder Hardware-Unterschiede ermöglicht wird, können also beide Rechner sehr flexibel entsprechend ihrem jeweiligen Zeitbedarf zur Auswertung der Steuersignale arbeiten, was gerade in kritischen Situationen die Reaktionsgeschwindigkeit der Steuereinheit stark erhöhen kann.

Auch die Sensoren können in redundanter Weise mehrfach angebracht und also auch in redundanter, im Prinzip aber sehr unterschiedlicher Weise dieselbe physikalische Größe messen. Z.B. können Lenkwinkelausschläge einmal in unmittelbarer Nähe der betreffenden Räder und dann redundant zusätzlich nahe an Lenkgetriebeteilen gemessen werden. Vor allem ist es auch möglich, nurjenen Sensor der redundanten Sensoren für die Auswertung zu berücksichtigen, welcher die stärksten Anzeichen eines Notfalles liefert.

Es ist nicht nötig, daß die Sensorsignale oderdaraus gewonnene - z.B. digitale - Steuersignale stets unmittelbar den Rechnern zugeführt werden. Man kann dazwischen auch Aufbereitungseinheiten - vgl. Ae1, Ae2, Ae3 in FIG 1 und Ae in FIG 2 - in die Zuführungen einfügen, welche die Steuersignale vorbearbeiten, z.B. in aus den Sensorsignalen ableitbare Parameter umrechnen, und/oder aus verschiedenen Sensorsignalen ein gemeinsames Steuersignal erarbeiten. Solche Aufbereitungseinheiten ermöglichen, daß die Rechner P1, P2 für sich in einem besonders raschen Auswerteperiodentakt arbeiten können, was die Zuverlässigkeit der Steuereinheit weiter erhöht

Solche Aufbereitungseinheiten können im Prinzip ihre Ergebnisse getrennt an die Rechner, vgl. AE1, AE2 in FIG 1, oder auch gemeinsam an beide Rechner, vgl. Ae3 in FIG 1 und Ae in FIG 2, weitergeben. Wenn sie ihre Ergebnisse jeweils an beide Rechner weitergeben, wird die Entlastung der beiden Rechner mit besonders wenig Hardware-Aufwand erreicht - wobei dann, wenn diese Aufbereitungseinheit dann zusätzlich gedoppelt ist, vgl. FIG 2, eine gegenseitige Überwachung bzw. eine worst-case-Selection durch die Rechner möglich, und die Rechner auch bei fehlerhaftem Arbeiten einer der beiden Aufbereitungseinheiten noch sehr zuverlässig und rasch im Bedarfsfall ihr Lenknotsignal abgeben.

Über eine nachträgliche Diagnose mittels einer Diagnoseeinheit Diag kann später bei der Wartung des Straßenfahrzeuges die Ursache von Störungen der Steuereinheit, z.B. bei Bedarf auch der Abweichungen zwischen den beiden Aufbereitungseinheiten, näher ermittelt werden.

Im Prinzip kann man Sensoren, welche redundant angebracht sind, so aufgeteilt an die Aufbereitungseinheiten anschließen, daß dereine Sensor an die eine Aufbereitungseinheit und der andere Sensor an die andere Aufbereitungseinheit angeschlossen wird, vgl. z.B. FIG 2. Dies gestattet z.B., nachträglich die Ursachen für unterschiedliche Sensorsignale von an sich zusammengehörenden redundanten Sensoren, z.B. mittels der Einheit Diag oder z.B. durch die Rechner selbst oder durch die Überwachungseinheit Sv - vgl. FIG 1 - zu ermitteln.

## Patentansprüche

1. Steuereinheit zum Lenken der Hinterräder eines Kraftfahrzeugs, die aufweist:
- eine durch ein Lenknotsignal gesteuerte Lenkeinrichtung (LE), durch die in einem Notfall der Lenkwinkel der Hinterräder notfallgerecht gesteuert wird,
- Sensoren (SE), durch die zumindest der Lenkwinkel (Lwr1, Lwr2), die Fahrgeschwindigkeit (Tach) und der Lenkradeinschlag (Lwl1, Lwl2) oder davon abhängige Größen erfaßt werden, und
- eine Recheneinheit (P), der die Sensorsignale oder davon abgeleitete Signale als Steuersignale zugeführt werden und von der, abhängig von einer Auswertung dieser Signale, das Lenknotsignal an die Lenkeinrichtung übermittelt wird,
**dadurch gekennzeichnet**,
- daß die Lenkeinrichtung (LE) zwei redundante Notorgane (Noh, Nom) aufweist, durch jedes von denen in einem Notfall der Lenkwinkel entsprechend einem vorgegebenen Notbetriebskonzept gesteuert wird.
- daß die Recheneinheit zwei Rechner (P1, P2) enthält,
- daß die Steuersignale beiden Rechnern zugeführt und in jedem für sich ausgewertet und Störungen eines Sensors(SE), eines Notorgans (Noh, Nom) und sonstiger Teile der Steuereinheit festgestellt werden, und
- daß von jedem der Rechner (P1, P2) unabhängig von dem jeweils anderen Rechner in einem Notfall unverzüglich ein Lenknotsignal ausgesendet wird.

2. Steuereinheit nach Anspruch 1, dadurch gekennzeichnet,
- daß für einen Selbsttest der Steuereinheit von Bestandteilen (Noh, Sa, L, Sv, Nom) der Steuereinheit Testsignale oder Statussignale den Rechnern (P1, P2) zugeführt werden, und
- daß von dem jeweiligen Rechner (P1, P2) beim Erkennen von Störungen eigener Bestandteile ein Lenknotsignal abgegeben wird.

3. Steuereinheit nach Anspruch 1, dadurch gekennzeichnet, daß von jedem der Rechner (P1, P2) ein Lenknotsignal über individuelle Lenknotsignalleitungen jeweils an beide Notorgane (Noh, Nom) gesendet wird.

4. Steuereinheit nach Anspruch 1, dadurch gekennzeichnet, daß zwischen beiden Rechnern (P1, P2) Informationen für eine nachträgliche Notfalldiagnose oder für einen gegenseitigen Test bei einem Betriebsstart oder während des laufenden Betriebs des Kraftfahrzeugs ausgetauscht werden.

5. Steuereinheit nach Anspruch 1, dadurch gekennzeichnet, daß nach Abgabe eines Lenknotsignals oder nach Erkennen eines Statussignals (St), durch das ein Fehler eines Bestandteils (Noh, Sa, L, SV, Nom) der Steuereinheit gemeldet wird, beide Rechner (P1, P2) angehalten, zu einer Fehlerdiagnose veranlaßt und danach wieder gestartet werden.

6. Steuereinheit nach Anspruch 1, dadurch gekennzeichnet, daß bei einem Start des Kraftfahrzeugs die Lenkeinrichtung (LE) zunächst wie in einem Notfall betrieben wird.

7. Steuereinheit nach Anspruch 1, dadurch gekennzeichnet, daß bei einem Start des Kraftfahrzeugs jedem der Rechner (P1, P2) ein anderes Notorgan (Noh, Nom) solange individuell zugeordnet wird, bis eine Überprüfung der Notorgane deren Fehlerfreiheit ergibt.

8. Steuereinheit nach Anspruch 1, dadurch gekennzeichnet, daß die beiden Notorgane (Noh, Nom) so ausgebildet sind, daß sie nach einem Start des Kraftfahrzeugs nur durch eine besondere Aktivierung in den Normalbetriebszustand übergehen.

9. Steuereinheit nach Anspruch 1, dadurch gekennzeichnet, daß zumindest durch einen der beiden Rechner (P1, P2) bei Normalbetrieb Lenksignale erzeugt werden, mit denen der Lenkwinkel durch die Lenkeinrichtung (LE) normal gesteuert wird.

## Claims

1. Control unit for steering the rear wheels of a motor vehicle, which has:
- a steering device (LE) which is controlled by an emergency steering signal and by means of which in an emergency the steering angle of the rear wheels is controlled in a manner appropriate for the emergency,
- sensors (SE) by means of which at the least the steering angle (Lwr1, Lwr2), the travelling speed (Tach) and the steering wheel angle (Lwl1, Lwl2) or variables dependent thereon are detected, and
- a computing unit (P) to which the sensor signals or signals derived therefrom are fed as control signals and from which, as a function of an evaluation of these signals, the emergency steering signal is transferred to the steering device,
characterised in that
the steering device (LE) has two redundant emergency elements (Noh, Nom) by means of each of which the steering angle is controlled in an emergency in accordance with a predetermined emergency operating scheme,
- the computing unit contains two computers (P1, P2),
- the control signals are fed to both computers and evaluated separately in each and faults of a sensor (SE), an emergency element (Noh, Nom) and other parts of the control unit are established, and
- in an emergency an emergency steering signal is transmitted without delay from each of the computers (P1, P2) independently of the respective other computer,

2. Control unit according to Claim 1, characterised in that
- for a self-test of the control unit of components (Noh, Sa, L, Sv, Nom) of the control unit test signals or status signals are fed to the computers (P1, P2), and
- when faults of its own components are detected an emergency steering signal is issued by the respective computer (P1, P2).

3. Control unit according to Claim 1, characterised in that from each of the computers (P1, P2) an emergency steering signal is transmitted via individual emergency steering signalling lines in each case to both emergency elements (Noh, Nom).

4. Control unit according to Claim 1, characterised in that information for a subsequent emergency diagnosis or for a mutual test in the event of an operational start or during the ongoing operation of the motor vehicle is exchanged between the two computers (P1, P2).

5. Control unit according to Claim 1, characterised in that after an emergency steering signal is issued or after a status signal (St) is detected, by means of which signal a fault of a component (Noh, Sa, L, SV, Nom) of the control unit is reported, both computers (P1, P2) are stopped, made to undergo a fault diagnosis and subsequently restarted.

6. Control unit according to Claim 1, characterised in that when the motor vehicle starts the steering device (LE) is initially operated as in an emergency.

7. Control unit according to Claim 1, characterised in that when the motor vehicle starts each of the computers (P1, P2) is individually assigned a different emergency element (Noh, Nom) until a testing of the emergency elements indicate their freedom from faults.

8. Control unit according to Claim 1, characterised in that the two emergency elements (Noh, Nom) are constructed in such a way that after the motor vehicle starts they only go into the normal operating state by means of a special activation.

9. Control unit according to Claim 1, characterised in that steering signals with which the steering angle is normally controlled by the steering device (LE) are generated at least by one of the two computers (P1, P2) during normal operation.

## Revendications

1. Unité de commande pour braquer les roues arrière d'un véhicule automobile, qui comporte:
- un dispositif de braquage (LE), commandé par un signal d'urgence de braquage et qui, dans un cas d'urgence, commande l'angle de braquage des roues arrière d'une manière adaptée au cas d'urgence,
- des capteurs (SE), qui détectent au moins l'angle de braquage (Lwr1, Lwr2), la vitesse de déplacement (Tach) et l'angle du volant (Lwℓ1, Lwℓ2) ou des grandeurs qui en dépendent et
- une unité de calcul (P), à laquelle sont envoyés, en tant que signaux de commande, les signaux des capteurs ou des signaux dérivés de ces derniers, et qui retransmet, en fonction d'une évaluation de ces signaux, le signal d'urgence de braquage au dispositif de braquage,
caractérisée par le fait
- que le dispositif de braquage (LE) comporte deux organes de commande d'urgence redondants (Noh, Nom), dont chacun d'eux commande, dans un cas d'urgence, l'angle de braquage en fonction d'un concept de fonctionnement d'urgence prédéterminé
- que l'unité de calcul comporte deux ordinateurs (P1,P2),
- que les signaux de commande sont envoyés aux deux ordinateurs et sont évalués séparément dans chacun de ces ordinateurs et des perturbations d'un capteur (SE), d'un organe de commande d'urgence (Noh, Nom) et d'autres parties de l'unité de commande sont établies
- que chacun des ordinateurs (P1,P2) envoie immédiatement, dans un cas d'urgence, un signal de braquage d'urgence indépendamment de l'autre ordinateur.

2. Unité de commande selon la revendication 1, caractérisée par le fait
- que pour un autocontrôle de l'unité de commande, des composants (Noh, Sa, L, Sv, Nom) de l'unité de commande envoient des signaux de test ou des signaux d'état aux ordinateurs (P1,P2),
- que, lors de l'identification de perturbations de composants indépendants, un signal d'urgence de braquage est délivré par l'ordinateur respectif (P1,P2).

3. Unité de commande suivant la revendication 1, caractérisée par le fait que chacun des ordinateurs (P1,P2) envoie un signal d'urgence de braquage par l'intermédiaire de lignes individuelles de transmission de signaux d'urgence de braquage respectivement aux deux organes de commande d'urgence (Noh, Nom).

4. Unité de commande suivant la revendication 1, caractérisée par le fait que des informations sont échangées entre les deux ordinateurs pour un diagnostic ultérieur de cas d'urgence ou pour un test réciproque lors d'un démarrage du fonctionnement ou pendant le fonctionnement en cours du véhicule automobile.

5. Unité de commande suivant la revendication 1, caractérisée par le fait qu'après la délivrance d'un signal de braquage d'urgence ou après l'identification d'un signal d'état (St), au moyen duquel un défaut d'un composant (Noh, Sa, L, Sv, Lom) est signalé à l'unité de commande, les deux ordinateurs (P1, P2) sont arrêtés, un diagnostic de défaut est déclenché, puis un nouveau démarrage est exécuté.

6. Unité de commande suivant la revendication 1, caractérisée par le fait que, lors d'un démarrage du véhicule automobile, le dispositif de braquage (LE) fonctionne tout d'abord comme dans un cas d'urgence.

7. Unité de commande suivant la revendication 1, caractérisée par le fait que lors d'un démarrage du véhicule automobile, à chacun des ordinateurs (P1,P2) est associé individuellement un autre organe de commande d'urgence (Noh, Nom), jusqu'à ce qu'un contrôle des organes de commande d'urgence établit une absence de défaut de ces organes.

8. Unité de commande suivant la revendication 1, caractérisée par le fait que les deux organes de commande d'urgence (Noh, Nom) sont agencés de manière qu'après un démarrage du véhicule automobile, ils passent dans l'état de fonctionnement normal uniquement au moyen d'un actionnement particulier.

9. Unité de commande suivant la revendication 1, caractérisée par le fait que dans le cas d'un fonctionnement normal, au moins l'un des deux ordinateurs (P1,P2) produit des signaux de braquage, à l'aide desquels l'angle de braquage est commandé d'une manière normale par le dispositif de braquage (LE).
